# EUROPEAN PATENT APPLICATION

(11) **EP 4 242 805 A1**
(43) Date of publication of application: **13.09.2023**
(21) Application number: 22801950.1
(22) Date of filing: 09.11.2022
(51) Int. Cl.: G06F 3/041

(54) **ELECTRONIC DEVICE AND METHOD FOR RECOGNIZING USER INTENT FROM TOUCH INPUT ON VIRTUAL KEYBOARD, AND NON-TRANSITORY COMPUTER-READABLE STORAGE MEDIUM**

(30) Priority: 27.01.2022 KR 20220012496; 08.02.2022 KR 20220015981
(71) Applicant: Samsung Electronics Co., Ltd., Gyeonggi-do 16677 (KR)
(72) Inventor: KIM, Junsung, Gyeonggi-do 16677 (KR); KIM, Bosung, Gyeonggi-do 16677 (KR); KIM, Taekyoung, Gyeonggi-do 16677 (KR); JEONG, Seoghee, Gyeonggi-do 16677 (KR); KIM, Sangheon, Gyeonggi-do 16677 (KR); KIM, Seokwon, Gyeonggi-do 16677 (KR); KIM, Heewon, Gyeonggi-do 16677 (KR); LEE, Sangyong, Gyeonggi-do 16677 (KR); LIM, Yeunwook, Gyeonggi-do 16677 (KR)
(74) Representative: HGF
(86) International application number: PCT/KR2022/017581
(87) International publication number: WO 2023/146077

(57) **Abstract**

According to an example, a method for operating an electronic device including a display includes receiving a touch input with a point of contact on a first key among a plurality of keys in a virtual keyboard displayed via the display. The method includes identifying, based on a first character indicated by the first key, a second character indicated by a second key adjacent to the first key among the plurality of keys, and at least one third character that has been displayed in a text input portion displayed with the virtual keyboard before the touch input is received, a character from among the first character and the second character, in response to the touch input. The method includes displaying the identified character in the text input portion via the display.

## Description

### [Technical Field]

The following descriptions relate to an electronic device, a method, and a non-transitory computer readable storage medium for recognizing a user intent from a touch input on a virtual keyboard.

### [Background Art]

A virtual keyboard displayed through a display of an electronic device may be a software component that applies an input of characters without requiring physical keys. An interaction with the virtual keyboard may mostly happen via a touch sensor of the electronic device operatively coupled to the display.

### [Disclosure]

### [Technical Solution]

According to an example, an electronic device may comprise a display, a memory configured to store instructions, and a processor. The processor may be, when the instructions are executed, configured to receive a touch input with a point of contact on a first key among a plurality of keys in a virtual keyboard displayed via the display. The processor may be, when the instructions are executed, configured to identify, based on a first character indicated by the first key, a second character indicated by a second key adjacent to the first key among the plurality of keys, and at least one third character that has been displayed in a text input portion displayed with the virtual keyboard before the touch input is received, a character from among the first character and the second character, in response to the touch input. The processor may be, when the instructions are executed, configured to display the identified character in the text input portion via the display.

According to an example, a method for operating an electronic device including a display may comprise receiving a touch input with a point of contact on a first key among a plurality of keys in a virtual keyboard displayed via the display. The method may comprise identifying, based on a first character indicated by the first key, a second character indicated by a second key adjacent to the first key among the plurality of keys, and at least one third character that has been displayed in a text input portion displayed with the virtual keyboard before the touch input is received, a character from among the first character and the second character, in response to the touch input. The method may comprise displaying the identified character in the text input portion via the display.

According to an example, a non-transitory computer readable storage medium may store one or more programs. The one or more programs may include instructions which, when being executed by a processor of an electronic device, cause the electronic device to receive a touch input with a point of contact on a first key among a plurality of keys in a virtual keyboard displayed via the display. The one or more programs may include instructions which, when being executed by a processor of an electronic device, cause the electronic device to identify, based on a first character indicated by the first key, a second character indicated by a second key adjacent to the first key among the plurality of keys, and at least one third character that has been displayed in a text input portion displayed with the virtual keyboard before the touch input is received, a character from among the first character and the second character, in response to the touch input. The one or more programs may include instructions which, when being executed by a processor of an electronic device, cause the electronic device to display the identified character in the text input portion via the display.

### [Description of the Drawings]

FIG. 1 is a block diagram of an electronic device in a network environment according to various examples.
FIG. 2 is a flowchart illustrating a method of identifying a character intended by a user in response to a touch input, according to an example.
FIG. 3 illustrates an exemplary virtual keyboard displayed through a display of an electronic device according to an example.
FIG. 4 is a flowchart illustrating a method of identifying one character of a first character and a second character, according to an example.
FIG. 5A is a flowchart illustrating a method of identifying one character of a first character and a second character based on a position of a contact point of a touch input according to an example.
FIG. 5B illustrates an example of a recognition region and a protection region identified according to an example.
FIG. 6 is a flowchart illustrating a method of enlarging a first key and a second key in a virtual keyboard, according to an example.
FIG. 7 illustrates an example of a first key with enlarged size and a second key with enlarged size, which are displayed according to an example.
FIG. 8 is a flowchart illustrating a method of adjusting information regarding usage history of a virtual keyboard according to an example.
FIG. 9 illustrates an example of an input for deleting a character displayed in a text input portion according to an example.
FIG. 10 is a flowchart illustrating a method of refraining from or bypassing identifying a second character indicated by a second key according to an example.
FIG. 11 is a flowchart illustrating a method of identifying a character based on adjusting a plurality of predetermined words, according to an example.
FIG. 12 illustrates exemplary software modules used to identify a character intended by a user in response to a touch input, according to an example.

### [Mode for Invention]

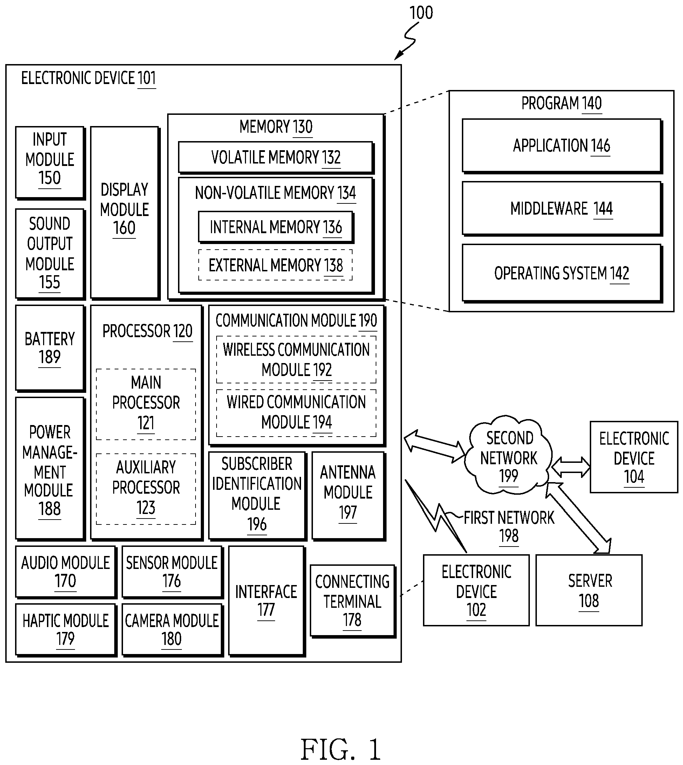

FIG. 1 is a block diagram illustrating an electronic device 101 in a network environment 100 according to various examples.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some examples, at least one of the components (e.g., the connecting terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an example, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form a mmWave antenna module. According to an example, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

A plurality of keys of the virtual keyboard each indicating a plurality of characters may be arranged adjacent to each other due to a limit of a display region of the display of the electronic device. Due to the arrangement, a typographical error in which a non-intended character is displayed through the display in response to a touch input on the virtual keyboard may occur.

Certain examples of the present disclosure provide a method for inputting a character using a virtual keyboard comprising a plurality of keys. For example, the virtual keyboard may be displayed on a touch screen. For example, this method may be executed by the electronic device 101 illustrated in FIG. 1 or the processor 120 illustrated in FIG. 1.

The method may comprise: receiving a touch input on the virtual keyboard (e.g. through the touch screen); identifying a set of one or more candidate characters based on the touch position of the touch input; and selecting a character from among the candidate characters as a character to be input.

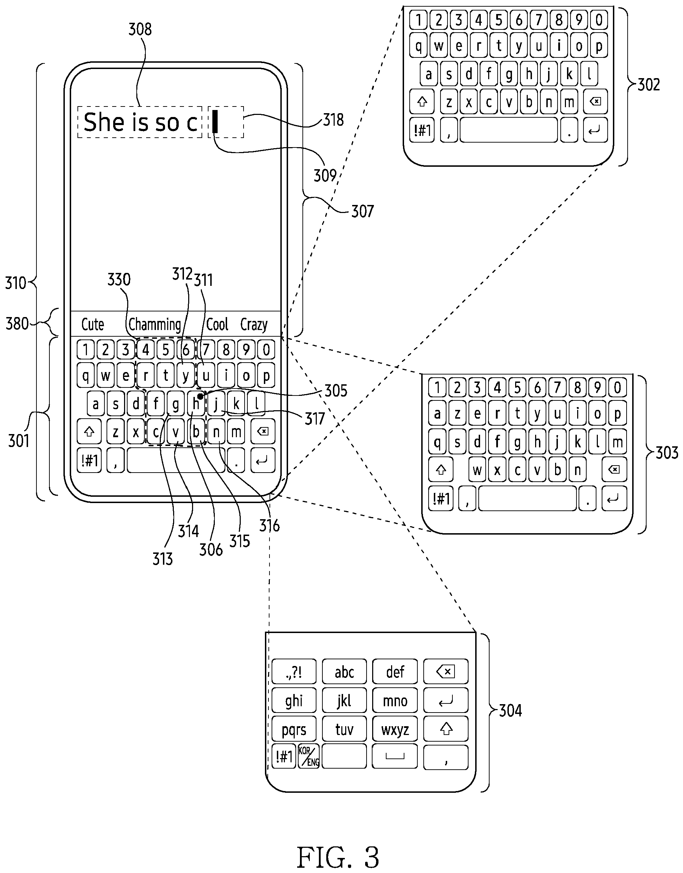

In certain examples, the set of candidate characters may comprise one or more characters associated with a key located at the touch position of the touch input. As a non-limiting example, if a user touches a key corresponding to character "h" (see Figure 3, 306) then the set of candidate characters may comprise character "h". As a further non-limiting example, if a user touches a single key corresponding to multiple characters "g", "h" and "i" (see Figure 3, 304) then the set of candidate characters may comprise characters "g", "h" and "i".

In certain examples, the set of candidate characters may comprise one or more characters associated with one or more keys that are adjacent to a key located at the touch position of the touch input. As a non-limiting example, if a user touches a key corresponding to character "h" and that key is surrounded by keys corresponding to characters "u", "y", "g", "v", "b", "n" and "j" (see Figure 3, 311-317) then the set of candidate characters may comprise characters "u", "y", "g", "v", "b", "n" and "j".

In certain examples, the set of candidate characters may comprise one or more characters associated with one or more keys located within a predetermined distance from the touch position of the touch input (e.g. touch position 305 illustrated in Figure 3).

In certain examples, selecting a character from among the candidate characters may comprise determining a likelihood value for each candidate character, wherein each likelihood value represents an estimated probability that the corresponding candidate character was intended to be selected by the touch input. For example, a relatively high likelihood value indicates that there is a relatively high probability that the user intended to input the corresponding character. On the other hand, a relatively low likelihood value indicates that there is a relatively low probability that the user intended to input the corresponding character.

In certain examples, the method may comprise determining the type of object (e.g. finger or stylus) used to apply the touch input, wherein the likelihood values may be determined based on the determined type of object. As a non-limiting example, a user may typically apply touch inputs more accurately when using a stylus compared to using a finger. Therefore, when using a stylus, there may be a greater confidence that the actually touched key is the key intended to be touched, in comparison to using a finger. Accordingly, when a user touches a key corresponding to a certain character, that character may be assigned a higher likelihood value if a stylus is used than if a finger is used.

In certain examples, the likelihood values may be determined based on the location of the touch position. In a non-limiting example, a user may typically apply touch inputs more accurately when applying the inputs to a centre region of the keyboard in comparison to a side region. Therefore, when applying a touch input to a centre region of the keyboard, there may be a greater confidence that the actually touched key is the key intended to be touched, in comparison to when applying a touch input to an edge region. Accordingly, when a user touches a key corresponding to a certain character, that character may be assigned a higher likelihood value if the key is in the centre region than if the key is in an edge region. In another non-limiting example, a user may have a tendency to touch certain keys with relatively high accuracy but to touch certain other keys with relatively low accuracy, and so the likelihood values of characters corresponding to the keys may be determined accordingly.

In certain examples, the method may comprise determining the position of the a user's hand (e.g. that both holds the device and applies the touch input), wherein the likelihood values may be determined based on the location of the touch position relative to the position of the user's hand. In a non-limiting example, a user may typically apply a touch input more accurately when the touch position of the input is located relatively far from the user's hand holding the device in comparison to when the touch position is located relatively close to the user's hand. Therefore, when applying a touch input at a position relatively far from the user's hand, there may be a greater confidence that the actually touched key is the key intended to be touched, in comparison to when applying a touch input at a position relatively close to the user's hand. Accordingly, when a user touches a key corresponding to a certain character, that character may be assigned a higher likelihood value if the key is relatively far from the user's hand than if the key is relatively close to the user's hand.

In certain examples, the likelihood values may be determined based on the size of the keys of the virtual keypad. In a non-limiting example, a user may typically apply a touch input more accurately when the keys of the keypad are relatively large in comparison to when the keys are relatively small. Therefore, when applying a touch input on a relatively large key, there may be a greater confidence that the actually touched key is the key intended to be touched, in comparison to when applying a touch input on a relatively small key. Accordingly, when a user touches a key corresponding to a certain character, that character may be assigned a higher likelihood value if the key is relatively large than if the key is relatively small.

In certain examples, the likelihood values may be determined based on a display mode (e.g. portrait mode or landscape mode) of the virtual keypad. In a non-limiting example, the key size of the virtual keyboard may be larger when the display mode is the landscape mode compared to the portrait mode. Accordingly, a character corresponding to a touched key may be assigned a likelihood value based on the key size, as described above, based in turn on the display mode.

In certain examples, the likelihood values may be determined based on the time period between key selection. For example, the time period may be the period between the current key selection and the preceding key selection, or an average time period between the preceding N key selections. In a non-limiting example, a user may typically apply a touch input more accurately when a typing speed (represented, for example, by the time period described above) is relatively slow in comparison to when the typing speed is relatively quick. Therefore, when applying a touch input during typing of a relatively slow speed, there may be a greater confidence that the actually touched key is the key intended to be touched, in comparison to when the typing speed is relatively quick. Accordingly, when a user touches a key corresponding to a certain character, that character may be assigned a higher likelihood value if the typing speed is relatively low than if the typing speed is relatively quick.

In certain example, in each of the above cases, when the likelihood value of a character corresponding to an actually-touched key is relatively high, then the likelihood values of characters corresponding to other keys (e.g. adjacent keys) may be relatively low. Conversely, when the likelihood value of a character corresponding to an actually-touched key is relatively low, then the likelihood values of characters corresponding to other keys (e.g. adjacent keys) may be relatively high.

In certain examples, the likelihood values may be determined based on one or more previously inputted characters. For example, text analysis may be performed on the previously inputted characters to determine the likelihood of each of the candidate characters as a next character of the previously inputted characters. This may include one or more of the following.

For example, a relatively high likelihood value may be assigned if the candidate character potentially forms a valid word, or partial word, if combined (e.g. as a next character) with one or more previously input characters, or as the first character of a new word. In contrast, a relatively low likelihood value may be assigned if the candidate character does not potentially form a valid word.

For example, a relatively high likelihood value may be assigned if the candidate character potentially forms a relatively common word, or partial word, if combined (e.g. as a next character) with one or more previously input characters, or as the first character of a new word. In contrast, a relatively low likelihood value may be assigned if the candidate character potentially forms a relatively rare word.

For example, a relatively high likelihood value may be assigned if the candidate character potentially forms a word, or partial word, used relatively frequently by the user (e.g. as determined by a past history). In contrast, a relatively low likelihood value may be assigned if the candidate character potentially forms a word, or partial word, used relatively infrequently by the user.

In certain example, in each of the above cases, the likelihood values may be determined based on a past history. In certain examples, the likelihood values may be dynamically adjusted based on usage history.

The skilled person will appreciate that the various factors described above to assign likelihood values to the candidate characters may be used individually or in any suitable combination. Furthermore, any other suitable factors may be used, either individually or in combination with one or more of the above factors.

In certain examples, selecting a character from among the candidate characters as a character to be input may comprise: determining a first set of one or more candidate characters; determining a likelihood value for each candidate character in the first set; determining whether there is satisfied a condition based on the likelihood values for the candidate characters in the first set; and if the condition is satisfied, selecting a character from among the first set of candidate characters as a character to be input based on the likelihood values for the candidate characters in the first set. In certain examples, the method may comprise: if the condition is not satisfied, determining a second set of one or more candidate characters, determining a likelihood value for each candidate character in the second set, and selecting a character from among the second set of candidate characters as a character to be input based on the likelihood values for the candidate characters in the second set.

In certain examples, the condition may comprise: at least one likelihood value of candidate characters in the first set represents an estimated probability above a certain threshold that the corresponding candidate character was intended to be selected by the touch input.

The first and second sets of candidate characters may be any suitable sets of candidate characters, for example sets of candidate characters as described above. For example, the first set of candidate characters may comprise one or more characters associated with a key located at the touch position of the touch input. For example, the second set of candidate characters may comprise one or more characters associated with one or more keys that are adjacent to a key located at the touch position of the touch input.

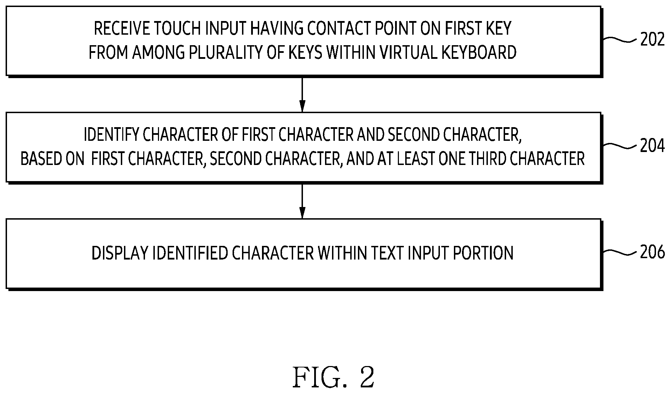

FIG. 2 is a flowchart illustrating a method of identifying a character intended by a user in response to a touch input, according to an example. This method may be executed by the electronic device 101 illustrated in FIG. 1 or the processor 120 illustrated in FIG. 1.

FIG. 3 illustrates an exemplary virtual keyboard displayed through a display of an electronic device according to an example.

Referring to FIG. 2, in operation 202, the processor 120 may receive a touch input with a point of contact on a first key from among a plurality of keys in the virtual keyboard displayed through the display (e.g., display module 160).

For example, the virtual keyboard may be a software component that applies input of characters without requiring physical keys. For example, the virtual keyboard may include a plurality of keys including keys indicating each of the characters.

For example, each of the characters may be an entity defined for communication. For example, the characters may include a letter. For example, the characters may include a symbol, a mark, or a sign. For example, the characters may include numbers. For example, the characters may include icons such as emoticon or emoji graphical object. However, it is not limited thereto.

For example, the plurality of keys may include an executable object for displaying one character from among the characters through the display. For example, the character may be displayed through the display in response to an input to the executable object. However, it is not limited thereto.

For example, the plurality of keys may include an executable object for executing a predetermined function. For example, the predetermined function may include a function of changing a position of a pointer (or cursor) in a text input portion displayed together with the virtual keyboard and/or a function of deleting a character displayed in the text input portion. However, it is not limited thereto.

For example, the virtual keyboard displayed through the display may include the plurality of keys in various arrays according to a setting of the electronic device 101 or a user setting. For example, referring to FIG. 3, according to the setting of the electronic device 101 or the user setting, the plurality of keys may be included in the virtual keyboard as a first array 301, may be included in the virtual keyboard as a second array 302, may be included in the virtual keyboard as a third array 303, or may be included in the virtual keyboard as a fourth array 304. However, it is not limited thereto.

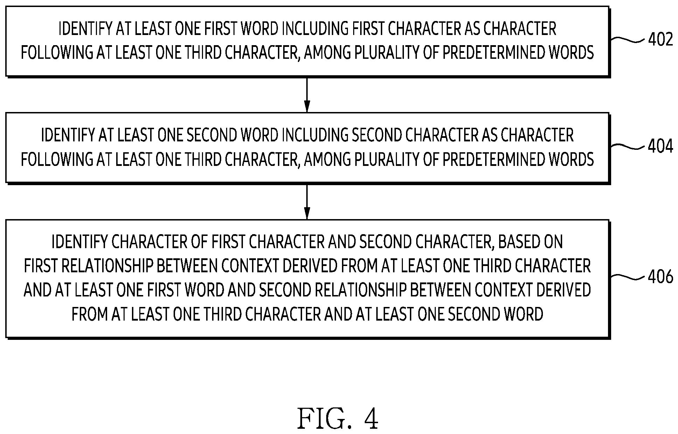

In an example, the virtual keyboard may be displayed together with the recommended word display region 380. For example, the recommended word display region 380 may include at least portion of a plurality of predetermined words to be described later through the description of FIG. 4. For example, the recommended word display region 380 may include words including a character "c" adjacent to pointer 309, such as "cute", "charming", "cool", and "crazy". However, it is not limited thereto.

Referring back to FIG. 2, the touch input may be caused by an input means. For example, the touch input may be caused by a user's finger. As another example, the touch input may be caused by a stylus pen interlocking with electronic device 101. However, it is not limited thereto.

The touch input may have a contact point in which the input means is a point in contact with the display. For example, the contact point may be a representative point among a plurality of points in the region in which the input means contacts the display. For example, when a touch sensor operatively coupled to the display is a capacitive touch sensor, the contact point may be a position in the display in which the highest or most capacitance change due to the touch input is identified. However, it is not limited thereto.

In an example, the contact point of the touch input may be positioned on a first key among the plurality of keys. For example, referring to FIG. 3, the processor 120 may receive the touch input having a contact point 305 on the first key 306 among the plurality of keys in the virtual keyboard. For example, the touch input may be received while the text input portion 307 is displayed with the virtual keyboard. For example, the processor 120 may receive the touch input, while a text input portion 307 including at least one third character 308 displayed based on at least one other touch input received through the virtual keyboard and a pointer 309 displayed next to the at least one third character 308 is displayed with the virtual keyboard.

For example, the virtual keyboard and the text input portion 307 may be arranged in various ways according to a setting of a software application providing the text input portion 307, a setting of the electronic device 101, or a user setting. For example, as illustrated in FIG. 3, the virtual keyboard may be partially superimposed on a user interface 310 including the text input portion 307. However, it is not limited thereto.

Referring back to FIG. 2, in operation 204, the processor 120 may identify a character of the first character and the second character in response to the touch input, based on the first character indicated by the first key, the second character indicated by the second key adjacent to the first key among the plurality of keys, and the at least one third character (e.g., at least one third character 308 illustrated in FIG. 3) displayed before the touch input is received in the text input portion (e.g., the text input portion 307 illustrated in FIG. 3) displayed with the virtual keyboard.

For example, referring to FIG. 3, the processor 120 may identify the first character (e.g., "h") indicated by the first key 306 on which the contact point 305 is positioned in response to the touch input. For example, the first character (e.g., "h") may be identified to consider a first probability that the contact point 305 is the user intent that caused the touch input.

For example, the processor 120 may identify the second character (e.g., "u") indicated by the second key 311 adjacent to the first key 306 in response to the touch input. For example, in response to the touch input, the processor 120 may identify a second key 311, a third key 312, a fourth key 313, a fifth key 314, a sixth key 315, a seventh key 316, and an eighth key 317 surrounding the first key 306, and may identify characters (e.g., "u", "y", "g", "v", "b", "n", and "j") respectively indicated by the second key 311 to the eighth key 317. For example, the second character (e.g., "u") or the characters (e.g., "u", "y", "g", "v", "b", "n", and "j") may be identified to consider a second probability that the position of the contact point is not the user intent to cause the touch input.

In an example, the processor 120 may identify characters (e.g., "u", "y", "g", "v", "b", "n", and "j") respectively indicated by a second key 311, a third key 312, a fourth key 313, a fifth key 314, a sixth key 315, a seventh key 316, and an eighth key 317 surrounding the first key 306, and may identify the second character (e.g., "u") among the characters. For example, the processor 120 may identify the second character (e.g., "u") corresponding to the context derived from at least one third character 308 among the characters (e.g., "u", "y", "g", "v", "b", "b", "n", and "j"). The processor 120 may identify one character of the first character (e.g., "h") and the second character (e.g., "u"), based on the first character (e.g., "h"), the second character (e.g., "u"), and at least one third character 308 after identifying the second character (e.g., "u") among the characters (e.g., "u", "y", "g", "v", "b", "n", and "j"). However, it is not limited thereto. In an example, the processor 120 may identify the characters (e.g., "u", "y", "g", "v", "b", "n", and "j") respectively indicated by the second key 311, the third key 312, the fourth key 313, the fifth key 314, the sixth key 315, the seventh key 316, and the eighth key 317 surrounding the first key 306 and may identify one character among the first character (e.g., "h") and the characters (e.g., "u", "y", "g", "v", "b", "n", and "j"), based on the first character (e.g., "h"), the characters (e.g., "u", "y", "g", "v", "b", "n", and "j "), and at least one third character 308 without identifying the second character (e.g., "u") among the characters (e.g., "u", "y", "g", "v", "b", "n", and "j"). However, it is not limited thereto.

The method of identifying the character based on the context will be described in more detail with reference to FIG. 4.

Meanwhile, for example, the processor 120 may identify at least one third character 308 included in text input portion 307 before the touch input is received, in response to the touch input. For example, at least one third character 308 may be identified to identify the first probability and the second probability.

Referring back to FIG. 2, the processor 120 may identify one character of the first character and the second character based on the first character, the second character, and the at least one third character.

In an example, the processor 120 may identify a type of input means causing the touch input, and may identify the character of the first character and the second character, further based on whether the identified type is a finger of a user or a stylus pen. For example, a first region in which the finger contacts the virtual keyboard may be wider than a second region in which the stylus pen contacts the virtual keyboard. Since the probability that the touch input from the stylus pen has the contact point on the first key different from the user intent may be lower than the probability that the touch input from the finger has the contact point on the first key different from the user intent, due to a difference between the first region and the second region, the processor 120 may identify the character of the first character and the second character, further based on the type of input means.

In an example, the processor 120 may identify the character of the first character and the second character, further based on whether a mode of the electronic device 101 is a portrait mode or a landscape mode. For example, a first size of each of the plurality of keys in the virtual keyboard while the port rate mode is provided may be smaller than a second size of each of the plurality of keys in the virtual keyboard in which the landscape mode is provided. Since the probability that the touch input has the contact point on the first key different from the user intent in the portrait mode may be higher than the probability that the touch input has the contact point on the first key different from the user intent in the landscape mode, due to the difference between the first size and the second size, the processor 120 may identify the character of the first character and the second character, further based on the mode of the electronic device 101.

In an example, the processor 120 may identify the character of the first character and the second character, further based on the relative position relationship between the position of the first key and the position of the user's hand that caused the touch input. For example, since the probability that the touch input has the contact point on the first key different from the user intent, on a condition that the first key is positioned relatively close to the user's hand that grips the electronic device 101, is lower than the probability that the touch input has the contact point on the first key different from the user intent, on a condition that the first key is positioned relatively far away from the hand, the processor 120 may identify the character of the first character and the second character, further based on the relative position relationship.

In an example, the processor 120 may identify the character of the first character and the second character further based on time between a timing at which another touch input immediately before the touch input has been received with respect to a key(e.g., "c" in at least one third character 308 illustrated in FIG. 3) among the plurality of keys and a timing at which the touch input has been received. For example, since the probability that the touch input has the contact point on the first key different from the user intent, on a condition of typing the virtual keyboard at the first speed, may be higher than the probability that the touch input has the contact point on the first key different from the user intent, on a condition of typing the virtual keyboard at a second speed slower than the first speed, the processor 120 may identify the character of the first character and the second character, further based on the time.

In an example, the processor 120 may identify the character of the first character and the second character further based on the position of the contact point. For example, since the probability that the touch input has the contact point on the first key different from the user intent, on a condition that the contact point is positioned within a center region of the first key, may be lower than the probability that the touch input has the contact point on the first key different from the user intent, on a condition that the contact point is positioned out of the center region, the processor 120 may identify the character of the first character and the second character, further based on the position of the contact point.

In operation 206, the processor 120 may display the identified character within the text input portion through the display. For example, on a condition that the identified character is the first character, the processor 120 may recognize the touch input as an input to the first key and display the first character within the text input portion according to the recognition. As another example, on a condition that the identified character is the second character, the processor 120 may recognize the touch input as an input to the second key instead of an input to the first key, and display the second character in the text input portion according to the recognition.

For example, referring to FIG. 3, the processor 120 may display the first character (e.g., "h") indicated by the first key 306 or the second character (e.g., "u") indicated by the second key 311 in a space 318 indicated by the cursor 309, based on the identification in operation 204.

As described above, the electronic device 101 may recognize the touch input, using not only the first character indicated by the first key in which the contact point of the touch input is positioned but also the second character indicated by the second key adjacent to the first key, and the at least one third character input to the text input portion before the touch input. The electronic device 101 may reduce the occurrence of typographical error based on the recognition. In other words, the electronic device 101 may enhance user convenience related to the use of the virtual keyboard.

FIG. 4 is a flowchart illustrating a method of identifying one character of a first character and a second character, according to an example. This method may be executed by the electronic device 101 illustrated in FIG. 1 or the processor 120 illustrated in FIG. 1.

Operations 402 to 406 of FIG. 4 may be detailed operations in operation 204 of FIG. 2. In an example, operations 402 to 406 may be executed while executing operation 204. However, it is not limited thereto.

Referring to FIG. 4, in operation 402, the processor 120 may identify at least one first word including the first character as a character following the at least one third character, among a plurality of predetermined words (or a plurality of recommended words) including at least a portion of the at least one third character has been displayed in the text input part before the touch input is received. For example, the processor 120 may identify the context of the at least one third character based on performing natural language processing for the at least one third character. For example, the processor 120 may identify the context using a neural processing unit (NPU) and/or a graphics processing unit (GPU). The processor 120 may identify the plurality of predetermined words including at least a portion of the at least one third character based on the identified context. The processor 120 may identify the at least one first word including the first character as a character following the at least one third character, among the plurality of predetermined words. For example, referring to FIG. 3, the processor 120 may identify "cute", "charming", "cool", and "crazy" as the plurality of predetermined words based on the context of at least one third character 308. The processor 120 may identify "charming" including the first character (e.g., "h") among "cute", "charming", "cool", and "crazy" as the at least one first word. However, it is not limited to thereto.

Referring back to FIG. 4, in operation 404, the processor 120 may identify at least one second word including the second character as a character following the at least one third character, among the plurality of predetermined words. For example, referring to FIG. 3, the processor 120 may identify "cute", "charming", "cool", and "crazy" as the plurality of predetermined words based on the context of at least one third character 308. The processor 120 may identify "cute" including the second character (e.g., "u") among "cute", "charming", "cool", and "crazy" as the at least one second word. However, it is not limited to thereto.

Unlike the above example, in order to identify the character to be displayed following at least one third character 308, when the characters (e.g., "u", "y", "g", "v", "b", "n", and "j") indicated by the second key 311, the third key 312, the fourth key 313, the fifth key 314, the sixth key 315, the seventh key 316, and the eighth key 317 surrounding the first key 306 are identified in operation 204, the processor 120 may identify "cute" as the at least one second word, based on searching for the plurality of predetermined words including "cute", "charming", "cool", and "crazy" identified based on the context of at least one third character 308, using "cu~", "cy~", "cg~", "cv-", "cb-", "en-", and "cj~". In other words, the second key 311 may be a key corresponding to the context of at least one third character 308, among the second key 311, the third key 312, the fourth key 313, the fifth key 314, the sixth key 315, the seventh key 316, and the eighth key 317 surrounding the first key 306. However, it is not limited to thereto.

Referring back to FIG. 4, in operation 406, the processor 120 may identify the character of the first character and the second character, based on a first relationship between the context derived from the at least one third character and the at least one first word, and a second relationship between the context derived from the at least one third character and the at least one second word. For example, since the first relationship may indicate a probability that the touch input has the contact point on the first key according to a user intent, and the second relationship may indicate a probability that the touch input has the contact point on the first key different from the intent, the processor 120 may identify the character to be displayed next to the at least one third character of the first character and the second character, based on the first relationship and the second relationship.

As described above, the electronic device 101 may recognize the touch input, based on whether the first character indicated by the first key where the contact point of the touch input is positioned is suitable for the context derived from the at least one third character, and whether the second character indicated by the second key adjacent to the first key is suitable for the context. The electronic device 101 may reduce the occurrence of typographical errors even when the touch input is received at a position not intended by the user, based on the recognition. In other words, the electronic device 101 may enhance user convenience related to the use of the virtual keyboard.

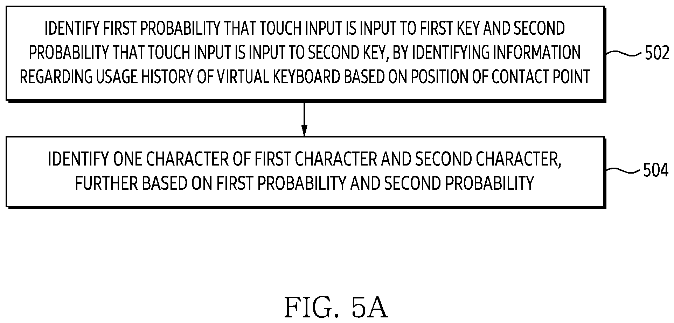

FIG. 5A is a flowchart illustrating a method of identifying one character of a first character and a second character based on a position of a contact point of a touch input according to an example. This method may be executed by the electronic device 101 illustrated in FIG. 1 or the processor 120 illustrated in FIG. 1.

Operation 502 and operation 504 of FIG. 5A may be detailed operations in operation 204 of FIG. 2. For example, operation 204 may include operation 502 and operation 504. For example, operation 204 may include operation 402 to operation 406, operation 502 and operation 504. However, it is not limited thereto.

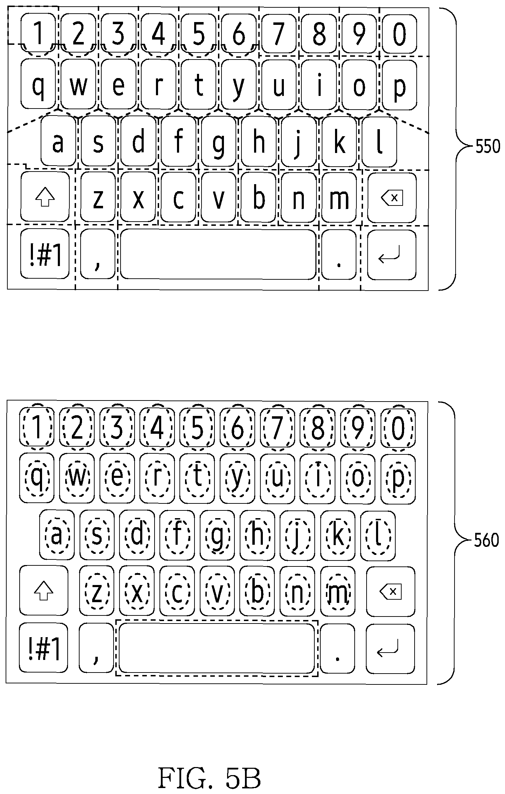

FIG. 5B illustrates an example of a recognition region and a protection region identified according to an example.

Referring to FIG. 5A, in operation 502, the processor 120 may identify a first probability that the touch input is an input to the first key and a second probability that the touch input is an input to the second key by identifying information regarding usage history of the virtual keyboard stored in the electronic device 101 based on the position of the contact point.

In an example, in response to the touch input, the processor 120 may identify the position of the contact point. For example, the position may be indicated through coordinates. However, it is not limited thereto. For example, in order to identify how another touch input with the contact point at the position, which was received prior to the touch input, was processed, the processor 120 may identify the information. For example, the information may include first data on the probability that an input on a position indicated by each of the coordinates is an input to a key of the virtual keyboard including each of the coordinates and second data on the probability that the input on the position is an input to other keys surrounding the key. The processor 120 may obtain the first data and the second data for the position from the information, and identify the first probability and the second probability based on the first data and the second data. However, it is not limited thereto.

In operation 504, the processor 120 may identify one character of the first character and the second character, further based on the first probability and the second probability.

For example, when the information includes data indicating that a second touch input for deleting the first character after displaying the first character indicated by the first key according to the first touch input having the contact point at the position, which was received before the touch input, is frequently received through the virtual keyboard and data indicating that a third touch input for the second key adj acent to the first key is frequently received after the second touch input is received, the processor 120 may recognize the touch input as a touch input for the second key instead of recognizing the touch input as a touch input for the first key, even though the contact point is positioned on the first key. However, it is not limited thereto.

For another example, when the information includes data indicating that a fourth touch input is frequently received to display another character distinguished from the first character after displaying the first character indicated by the first key according to the first touch input, which was received before the touch input, the processor 120 may recognize the touch input as a touch input for the first key. However, it is not limited thereto.

In an example, the first probability and the second probability may be changed according to where the first key is positioned on the virtual keyboard. For example, the plurality of keys in the virtual keyboard may include third keys in a predetermined region (e.g., a center region) and fourth keys out of the predetermined region. For example, since the probability that the touch input for each of the third keys in the predetermined region is an input according to the user intent may be lower than the probability that the touch input for each of the fourth keys in the surrounding region surrounding the predetermined region is an input according to the user intent, the predetermined region may be defined in the electronic device 101. For example, referring to FIG. 3, the predetermined region may be defined as a center region 330. However, it is not limited thereto. In an example, the predetermined region may be changed according to the usage history of the virtual keyboard. However, it is not limited thereto.

Referring back to FIG. 5A, in an example, the first probability and the second probability may be changed according to whether the first key is a key of one of the third keys or a key of one of the fourth keys. For example, the first probability on a condition that the first key is a key of one of the third keys may be lower than the first probability on a condition that the first key is a key of one of the fourth keys. For another example, the second probability on a condition that the first key is a key of one of the third keys may be higher than the second probability on a condition that the first key is a key of one of the fourth keys. However, it is not limited thereto.

In an example, when operation 204 of FIG. 2 includes operation 402 to operation 406 of FIG. 4 and operation 502 and operation 504 of FIG. 5A, the processor 120 may apply a first weight to the first result data according to the identifications of operations 402 to 406, and may apply a second weight to the second result data according to the identifications of operations 502 and 504. For example, the first weight and the second weight may be changed according to the usage history of the virtual keyboard. For example, the first weight may be higher than the second weight. For another example, the first weight may be the same as the second weight. For still another example, the first weight may be lower than the second weight. However, it is not limited thereto. The processor 120 may identify the character of the first character and the second character based on the first result data to which the first weight is applied and the second result data to which the second weight is applied.

In an example, the processor 120 may identify the recognition region of the virtual keyboard based on the first result data to which the first weight is applied and the second result data to which the second weight is applied, and identify the character among the first character and the second character based on the identified recognition region. For example, referring to FIG. 5B, the processor 120 may identify the recognition region 550 of the virtual keyboard with array 301, based on the first result data to which the first weight is applied and the second result data to which the second weight is applied. For example, the recognition region 550 may represent a method of recognizing a touch input by processor 120 according to the first result data to which the first weight is applied and the second result data to which the second weight is applied, and the recognition region 550 may not be visual information displayed through the display. For example, the recognition region 550 may be identified as various shapes according to the first result data to which the first weight is applied and the second result data to which the second weight is applied. In an example, since the position of the contact point of the touch input with respect to one of the plurality of keys in the virtual keyboard indicates the user intent, the recognition region 550 may be defined based on a guard area. For example, since a touch input having a contact point on a central portion of a region occupied by a key of the plurality of keys may be a touch input indicating that inputting a character indicated by the key the is user intent, regardless of the first result data to which the first weight is applied and the second result data to which the second weight is applied, the processor 120 may identify the recognition area 550 based on the guard area as well as the first result data to which the first weight is applied and the second result data to which the second weight is applied. For example, the guard area may be defined as a circle shape (and/or an oval shape) including a center portion of each of the plurality of keys, such as a guard area 560. Although FIG. 5B illustrates the guard area 560 having a circular shape and/or an oval shape, the shape of the guard area 560 may be defined as a rectangular shape or another shape, unlike the illustration in FIG. 5B.

Referring back to FIG. 5A, FIG. 5A illustrates operations of identifying the character according to a probability (e.g., the first probability and the second probability) identified based on the position of the contact point, but the operations may be replaced with other operations according to examples. For example, alternatively, the processor 120 may identify the character of the first character and the second character, based on a first distance between the position of the contact point and the center point of the first key, and a second distance between the position of the contact point and the center point of the second key.

As described above, the electronic device 101 may analyze the touch input based on the position of the contact point of the touch input before displaying the character in the text input portion in response to the touch input. The electronic device 101 may provide a response to the touch input corresponding to the user intent by recognizing the touch input based on the analysis. For example, the electronic device 101 may enhance user convenience related to the use of the virtual keyboard.

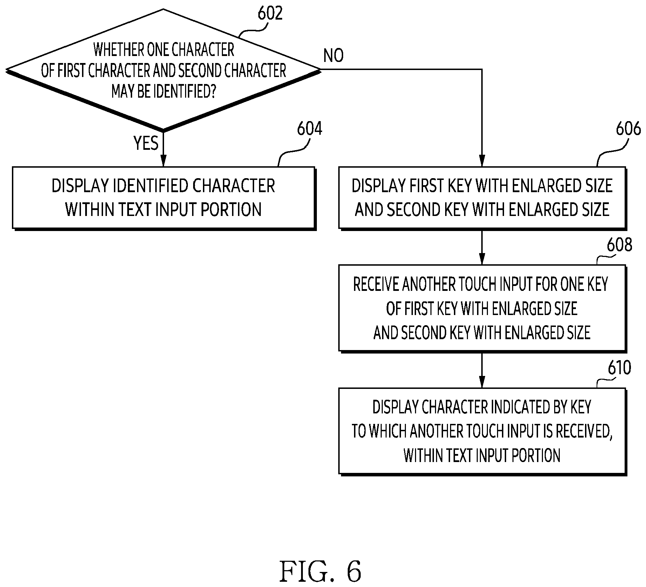

FIG. 6 is a flowchart illustrating a method of enlarging a first key and a second key in a virtual keyboard, according to an example. This method may be executed by the electronic device 101 illustrated in FIG. 1 or the processor 120 illustrated in FIG. 1.

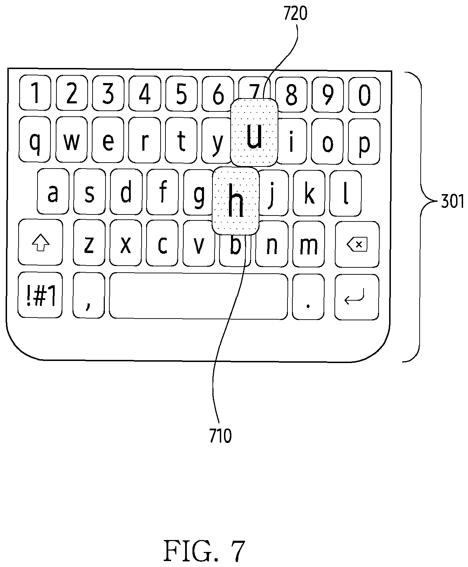

FIG. 7 illustrates an example of a first key with enlarged size and a second key with enlarged size, which are displayed according to an example.

Operation 602 of FIG. 6 may be executed after operation 204 of FIG. 2 is executed, or may be included in operation 204, and operation 604 of FIG. 6 may correspond to operation 206 of FIG. 2. However, it is not limited thereto.

Referring to FIG. 6, in operation 602, the processor 120 may identify whether one character of the first character and the second character may be identified based on the first character, the second character, and the at least one third character. For example, the processor 120 may identify that one character of the first character and the second character cannot be identified, on a condition that the first data indicating that the touch input is an input for displaying the first character within the text input portion is the same as second data indicating that the touch input is an input for displaying the second character in the text input portion, or the first data corresponds to the second data. For example, on a condition that the first data indicating the first relationship exemplified through the description of operation 406 is the same as the second data indicating the second relationship, the processor 120 may identify that one character of the first character and the second character cannot be identified. For another example, on a condition that the first data indicating the first probability, which is illustrated through the description of operation 504, is the same as the second data indicating the second probability, the processor 120 may identify that one character of the first character and the second character cannot be identified. For still another example, on a condition that the first data identified based on the first result data to which the first weight illustrated in the description of FIG. 5A is applied and the second result data to which the second weight is applied is the same as the second data identified based on the first result data to which the first weight is applied and the second result data to which the second weight is applied, the processor 120 may identify that one character of the first character and the second character cannot be identified. However, it is not limited thereto.

For example, the processor 120 may execute operation 606 on a condition for identifying that one character of the first character and the second character cannot be identified, otherwise may execute operation 604.

In operation 604, the processor 120 may display the identified character of the first character and the second character through the display in the text input portion. For example, the character may be displayed next to the at least one third character. For example, operation 604 may correspond to operation 206 of FIG. 2.

In operation 606, the processor 120 may display the first key with enlarged size and the second key with enlarged size through the display, based on identifying that one character to be displayed within the text input portion, among the first character and the second character, cannot be identified. In an example, according to the display of the first key with the enlarged size and the second key with the enlarged size, sizes of remaining keys other than the first key and the second key among the plurality of keys in the virtual keyboard may be changed. In an example, the arrangement of the remaining keys may be changed according to the display of the first key with the enlarged size and the second key with the enlarged size. In an example, according to the display of the first key with the enlarged size and the second key with the enlarged size, the display of the remaining keys may be ceased. For example, the display of the remaining keys may resume after operation 608 is executed. However, it is not limited thereto. In an example, the first key with the enlarged size and the second key with the enlarged size may be partially superimposed on the virtual keyboard. For example, the first key with the enlarged size and the second key with the enlarged size may be at least partially superimposed on a region including the first key and the second key in the virtual keyboard. For example, referring to FIG. 7, on the condition that one character, to be displayed in the text input portion, of the first character (e.g., "h") and the second character (e.g., "u") cannot be identified, the processor 120 may display the first key 710 with the enlarged size and a second key 720 with the enlarged size on the display, as superimposed on the virtual keyboard having the arrangement 301. In an example, the first key 710 with the enlarged size and the second key 720 with the enlarged size may be visually emphasized with respect to the plurality of keys within the virtual keyboard. For example, colors of each of the first key 710 with the enlarged size and the second key 720 with the enlarged size may be different from colors of each of the plurality of keys. For example, the virtual keyboard may be displayed as a blur effect while the first key 710 with the enlarged size and the second key 720 with the enlarged size are displayed. However, it is not limited thereto.

Referring back to FIG. 6, in operation 608, the processor 120 may receive another touch input for one key of the first key with the enlarged size and the second key with the enlarged size. In an example, while the first key with the enlarged size and the second key with the enlarged size are displayed, recognition of a touch input caused through a remaining region except for a region occupied by the first key with the enlarged size and the second key with the enlarged size may be limited. However, it is not limited thereto. In an example, while the first key with the enlarged size and the second key with the enlarged size are displayed, an operating frequency of a touch sensor of the electronic device 101 used to identify a touch input on a region occupied by the first key with the enlarged size and the second key with the enlarged size may be higher than an operating frequency of the touch sensor, in a state in which the first key with the enlarged size and the second key with the enlarged size are not displayed. However, it is not limited thereto.

In operation 610, the processor 120 may display a character indicated by the key to which the other touch input is received, within the text input portion. For example, the processor 120 may display the character identified based on the position of the contact point of the other touch input within the text input portion, without executing operation 204.

FIG. 6 illustrates operations displaying the first character with the enlarged size and the second character with the enlarged size, on a condition that one character to be displayed within the text input part among the first character and the second character cannot be identified, but the operations may be replaced with other operations, according to examples. For example, alternatively, the processor 120 may display the first character or the second character within the text input portion, on a condition that one character to be displayed within the text input portion cannot be identified, among the first character and the second character, without the execution of operation 606 and operation 610. For example, the processor 120 may display the first character indicated by the first key in the text input portion based on identification that the contact point of the touch input is positioned on the first key. For another example, the processor 120 may display the second character indicated by the second key within the text input portion, based on the identification that the context derived from the at least one third character further corresponds to the second character than the first character. However, it is not limited thereto.

As described above, as a result of recognition of the touch input, on a condition that the user intent cannot be estimated, the electronic device 101 may display the first key with the enlarged size and the second key with the enlarged size instead of displaying one character in the text input portion. The electronic device 101 may provide an enhanced user experience while the virtual keyboard is used through the above displaying.

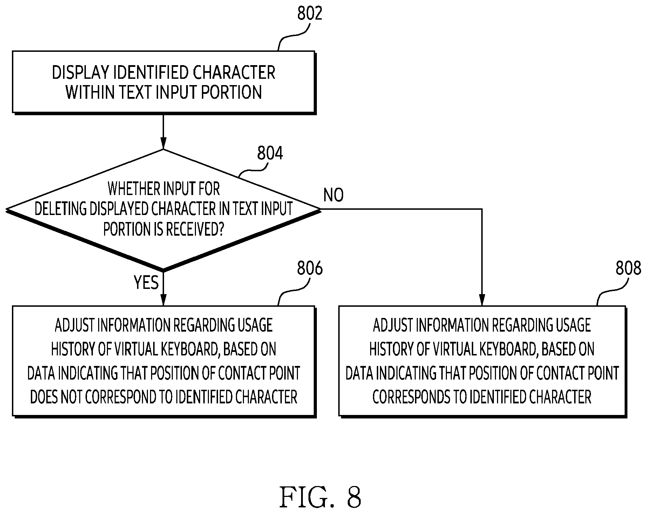

FIG. 8 is a flowchart illustrating a method of adjusting information regarding usage history of a virtual keyboard according to an example. This method may be executed by the electronic device 101 illustrated in FIG. 1 or the processor 120 illustrated in FIG. 1.

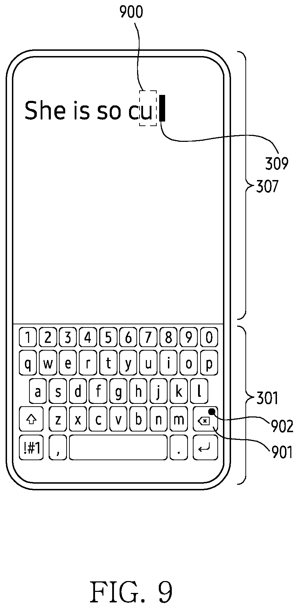

FIG. 9 illustrates an example of an input for deleting a character displayed in a text input portion according to an example.

Referring to FIG. 8, in operation 802, the processor 120 may display the identified character among the first character and the second character through the display in the text input portion. For example, operation 802 may correspond to operation 206 of FIG. 2, operation 604 of FIG. 6, and operation 610 of FIG. 6.

In operation 804, in response to the displaying of the character, the processor 120 may identify whether an input for deleting the displayed character in the text input portion is received before another character is displayed in the text input portion. For example, referring to FIG. 9, before another character is displayed within the text input portion 307 within a state in which the character (e.g., "u") identified among the first character (e.g., "h") and the second character (e.g., "u") is displayed in the text input portion 307, the processor 120 may identify whether an input 902 to key 901 for deleting character 900 next to pointer 309 among the plurality of keys in the virtual keyboard having array 301 is received.

Referring back to FIG. 8, the processor 120 may execute operation 806 on a condition that the input is received before the other character is displayed within the text input portion, and execute operation 808 on a condition that the input is not received before the other character is displayed within the text input portion.

In operation 806, in response to identifying that the input is received, the processor 120 may adjust, change, or refine information regarding usage history of the virtual keyboard, based on data indicating that the position of the contact point does not correspond to the identified character. For example, since the reception of the input may mean that the identification of the character is different from the user intent, the processor 120 may obtain the data indicating that the contact point of the touch input is not caused to input the character to the text input portion, and may adjust the information based on the data. For example, the probability that the touch input having the contact point, which is received after executing operation 806, is recognized as a touch input for the key of the virtual keyboard that indicates the character, may be lowered according to the result of the adjustment. However, it is not limited thereto.

In operation 808, based on identifying that the input is not received, the processor 120 may adjust, change, or refine the information regarding usage history of the virtual keyboard based on data indicating that the position of the contact point corresponds to the identified character. For example, since the state in which the input is not received may mean that the identification of the character corresponds to the user's intention, the processor 120 may obtain the data indicating that the contact point of the touch input is caused to input the character on the text input portion, and may adjust the information based on the data. For example, the probability that the touch input having the contact point, received after executing operation 808, is recognized as a touch input for the key to the virtual keyboard indicating the character may be increased according to the result of the adjustment. However, it is not limited thereto.

As described above, the electronic device 101 may adjust the information on the use history of the virtual keyboard. The electronic device 101 may reduce the occurrence of typographical errors through the above adjustment. In other words, the electronic device 101 may enhance user convenience related to the use of the virtual keyboard.

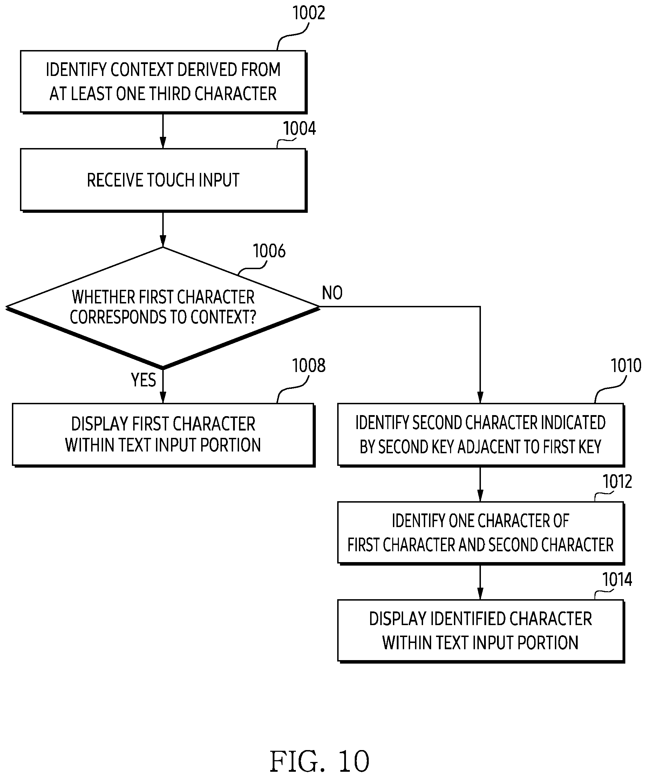

FIG. 10 is a flowchart illustrating a method of refraining from or bypassing identifying a second character indicated by a second key according to an example. This method may be executed by the electronic device 101 illustrated in FIG. 1 or the processor 120 illustrated in FIG. 1.

Referring to FIG. 10, in operation 1002, the processor 120 may identify a context derived from the at least one third character displayed in the text input portion. For example, operation 1002 may be executed before a touch input (e.g., a touch input of operation 1004) for inputting a character to be displayed next to the at least one third character is received.

In operation 1004, the processor 120 may receive the touch input for inputting a character to be displayed next to the at least one third character within the text input portion. For example, the touch input may be a touch input having a contact point on the first key among the plurality of keys of the virtual keyboard. For example, operation 1004 may be the same as or similar to operation 202 of FIG. 2.

In operation 1006, in response to the touch input, the processor 120 may identify whether the first character indicated by the first key on which the contact point is positioned corresponds to the context. For example, since corresponding to the context of the first character may mean that recognizing the touch input as a touch input for the first key has a relatively high probability of corresponding to the user intent, the processor 120 may identify a relationship between the first character and the context. For example, the processor 120 may execute operation 1008 on a condition that the first character corresponds to the context, otherwise may execute operation 1010.

In operation 1008, the processor 120 may display the first character indicated by the first key within the text input portion, based on identifying that the first character corresponds to the context. For example, the processor 120 may refrain from or may bypass identifying the second key adjacent to the first key and/or identifying the second character indicated by the second key, and display the first character within the text input portion, based on identifying the first character as a character to be displayed next to the at least one third character. In other words, in response to identifying that the first character corresponds to the context, without identifying the second key and/or the second character, the processor 120 may display the first character within the text input portion.

In operation 1010, the processor 120 may identify the second character indicated by the second key adjacent to the first key based on identifying the difference between the first character and the context. For example, since a difference between the first character and the context means that recognizing the touch input as a touch input for the first key has a relatively high probability of being different from the user intent, the processor 120 may identify the second key adjacent to the first key to search for another character distinguished from the first character, and identify the second character indicated by the second key.

In operation 1012, in response to the identification of the second character, the processor 120 may identify one character of the first character and the second character. For example, the processor 120 may identify one character of the first character and the second character, based on a relationship between the first character and the context and a relationship between the second character and the context.

In operation 1014, the processor 120 may display the identified character within the text input portion. For example, the identified character may be displayed next to the at least one third character.

As described above, the electronic device 101 may display a character corresponding to the user intent within the text input portion at a relatively high response speed, by executing a comparison between the first character indicated by the first key on which the contact point of the touch input is positioned and the context before identification of the second key (and/or the second character).

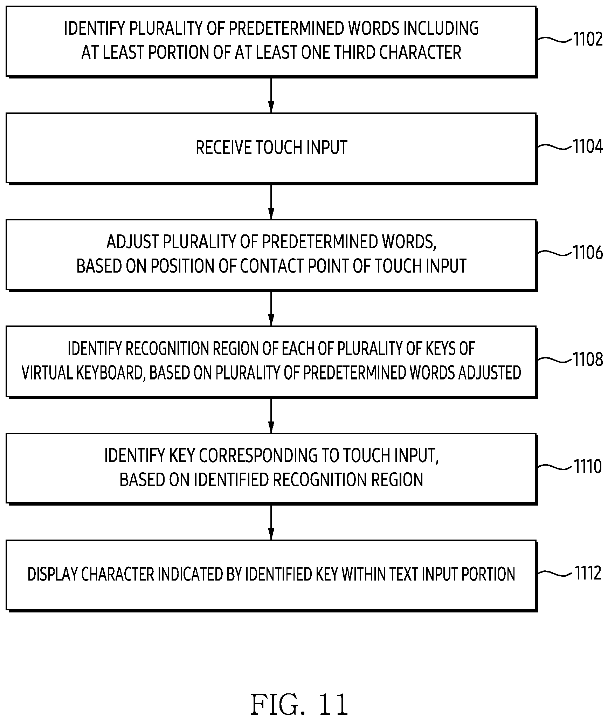

FIG. 11 is a flowchart illustrating a method of identifying a character based on adjusting a plurality of predetermined words, according to an example. This method may be executed by the electronic device 101 illustrated in FIG. 1 or the processor 120 illustrated in FIG. 1.

Referring to FIG. 11, in operation 1102, the processor 120 may identify a plurality of predetermined words including at least a portion of the at least one third character displayed in the text input portion. For example, the processor 120 may identify the plurality of predetermined words to estimate a character to be input after the at least one third character.

In operation 1104, after identifying the plurality of predetermined words or while identifying the plurality of predetermined words, the processor 120 may receive a touch input having a contact point on the first key among a plurality of keys of the virtual keyboard. For example, operation 1104 may be the same as or similar to operation 202 of FIG. 2.

In operation 1106, in response to the touch input, the processor 120 may adjust the plurality of predetermined words based on the position of the contact point of the touch input. For example, the processor 120 may adjust the plurality of predetermined words, by deleting part of the plurality of predetermined words identified in operation 1102 based on the position and/or adding a new word to the plurality of predetermined words identified in operation 1102 based on the position.

In operation 1108, the processor 120 may identify a recognition region of each of the plurality of keys of the virtual keyboard based on the plurality of predetermined words adjusted through operation 1106. For example, the recognition region may be different from the size of each of the plurality of keys of the virtual keyboard displayed through the display. For example, a display size of keys indicating character included in the plurality of predetermined words among the plurality of keys is the same as a display size of another key indicating character not included in the plurality of predetermined words among the plurality of keys. The size of the recognition region of the key may be larger than the size of the recognition region of the other key. However, it is not limited thereto.

In operation 1110, the processor 120 may identify a key corresponding to the touch input based on the identified recognition region. For example, the processor 120 may identify a key having a recognition region including the contact point of the touch input as a key corresponding to the touch input. However, it is not limited thereto.

In operation 1112, the processor 120 may display the character indicated by the identified key within the text input portion.

As described above, the electronic device 101 may apply the touch input, which may reflect the user intent, to a context derived from at least one character (e.g., at least one third character) displayed before the touch input, by adjusting the plurality of predetermined words after receiving the touch input. Through the above operation, the electronic device 101 may provide a service related to a virtual keyboard based on the touch input.

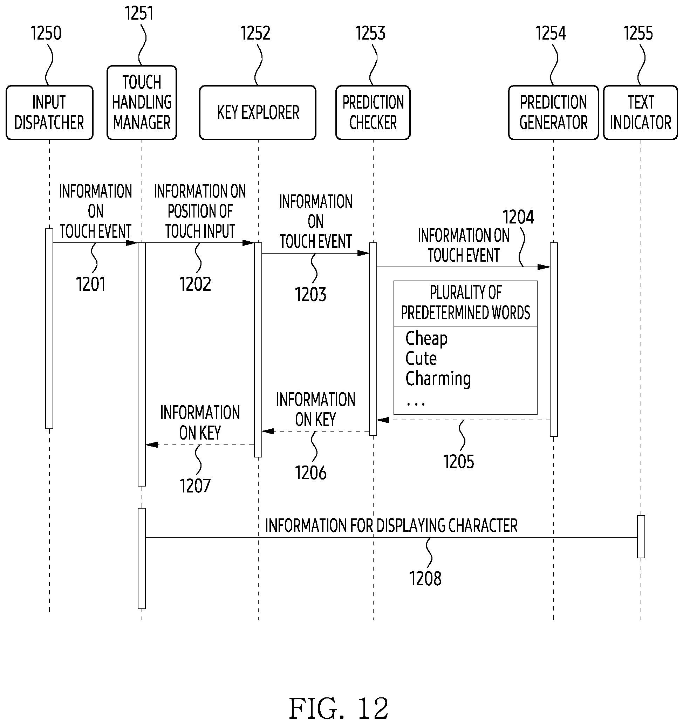

FIG. 12 illustrates exemplary software modules used to identify a character intended by a user in response to a touch input, according to an example. One or more operations of each of the software modules illustrated in FIG. 12 may be executed in a framework and/or a software application by the processor 120 illustrated in FIG. 1.

Referring to FIG. 12, in operation 1201, an input dispatcher 1250 may provide information on a touch event including reception of the touch input in operation 202, operation 1004, or operation 1104 to a touch handling manager 1251. For example, the input dispatcher 1250 may be a software module that transmits information on the touch event to a software application (e.g., the virtual keyboard) within the framework. For example, the touch handling manager 1251 may obtain information on the touch event from the input dispatcher 1250.

In operation 1202, the touch handling manager 1251 may provide information on the position of the touch input obtained based on the information on the touch event to the key explorer 1252 (e.g., may be referred to as "FindMostLikellyKey"). For example, the touch handling manager 1251 may be a software module that executes predetermined operations based on the information on the touch event. For example, the key explorer 1252 may obtain the information on the position of the touch input from the touch handling manager 1251.

In operation 1203, in order to identify the plurality of predetermined words, the key explorer 1252 may provide information on the touch event to a prediction checker 1253 (e.g., may be referred to as "Check Prediction") based on the information on the position of the touch input. For example, the key explorer 1252 may be a software module that identifies which of the plurality of keys in the virtual keyboard to connect the coordinates of the touch input. The prediction checker 1253 may obtain the information on the touch event from the key explorer 1252.

In operation 1204, the prediction checker 1253 may provide information on the touch event to the prediction generator 1254 (e.g., may be referred to as "Make Prediction"). For example, the prediction checker 1253 may be a software module for checking whether the position of the touch input is used to connect to any of a plurality of keys in the virtual keyboard using a word input before the touch input. For example, the prediction generator 1254 may obtain the information on the touch event from the prediction checker 1253.

In operation 1205, the prediction generator 1254 may derive a context based on the information on the touch event and provide information on the plurality of predetermined words identified based on the derived context to the prediction checker 1253. For example, the prediction generator 1254 may be a software module that recommends the plurality of predetermined words based on the position of the touch input and the context derived from at least one character input before the touch input. For example, the prediction checker 1253 may obtain the information on the plurality of predetermined words from the prediction generator 1254.

In operation 1206, the prediction checker 1253 may provide information on a key within the virtual keyboard corresponding to the touch input to the key explorer 1252 based on the information on the plurality of predetermined words. For example, the key explorer 1252 may obtain the information on the key from the prediction checker 1253.

In operation 1207, the key explorer 1252 may provide information on the key to the touch handling manager 1251. For example, in order to display a character indicated by the key through the touch handling manager 1251, the key explorer 1252 may provide the information on the key to the touch handling manager 1251. For example, the touch handling manager 1251 may obtain the information on the key from the key explorer 1252.

In operation 1208, the touch handling manager 1251 may identify the character corresponding to the key based on the information on the key and provide information for displaying the character to the text indicator 1255 (e.g., may be referred to as "TextView"). For example, the text indicator 1255 may display the character in the text input portion based on obtaining the information for displaying the character from the touch handling manager 1251.

The electronic device, the method, and the non-transitory computer readable storage medium according to an example can reduce the occurrence of a typographical error due to the touch input by recognizing the touch input based on a first character indicated by a first key in the virtual keyboard in which the touch input is received and a second character indicated by a second key adjacent to the first key.

As described above, according to an example, an electronic device may comprise a display, a memory configured to store instructions, and a processor. The processor may be, when the instructions are executed, configured to receive a touch input with a point of contact on a first key among a plurality of keys in a virtual keyboard displayed via the display. The processor may be, when the instructions are executed, configured to identify, based on a first character indicated by the first key, a second character indicated by a second key adjacent to the first key among the plurality of keys, and at least one third character that has been displayed in a text input portion displayed with the virtual keyboard before the touch input is received, a character from among the first character and the second character, in response to the touch input. The processor may be, when the instructions are executed, configured to display the identified character in the text input portion via the display.

In an example, the processor may be, when the instructions are executed, configured to identify at least one first word that includes the first character as a character following the at least one third character, among a plurality of predetermined words including at least portion of the at least one third character. In an example, the processor may be, when the instructions are executed, configured to identify at least one second word that includes, the second character as a character following the at least one third character. In an example, the processor may be, when the instructions are executed, configured to identify the character among from the first character and the second character, based on a first relation between context derived from the at least one third character and the at least one first word and a second relation between the context and the at least one second word.

In an example, the processor may be, when the instructions are executed, configured to identify the character among from the first character and the second character, further based on a position of the point of the contact.

In an example, the processor may be, when the instructions are executed, configured to identify, by identifying information regarding usage history of the virtual keyboard stored in the electronic device based on the position, a first probability that the touch input is an input on the first key and a second probability that the touch input is an input on the second key. In an example, the processor may be, when the instructions are executed, configured to identify the character among from the first the character and the second the character, further based on the first probability and the second probability.

In an example, the plurality of keys may include third keys in a predetermined region and fourth keys out of the predetermined region. In an example, he first probability and the second probability may be changed according to whether the first key is a key among the third keys or a key among the fourth keys.

In an example, the processor may be, when the instructions are executed, configured to identify, as the second key, a key corresponding to the context among keys surrounding the first key, in response to the touch input.

In an example, the processor may be, when the instructions are executed, configured to display the first key with enlarged size and the second key with enlarged size, on a condition that a character from among the first character and the second character is not capable of being identified based on the first character, the second character, and the at least one third character. In an example, the processor may be, when the instructions are executed, configured to display another touch input on a key from among the first key with the enlarged size and the second key with the enlarged size. In an example, the processor may be, when the instructions are executed, further configured to display, via the display, a character indicated by the key from which the other touch input is received, in the text input portion.

In an example, the processor may be, when the instructions are executed, further configured to adjust information regarding usage history of the virtual keyboard stored in the electronic device based on whether an input for deleting the character displayed in the text input portion from the text input portion, before another character is displayed in the text input portion, is received via the virtual keyboard.

In an example, the processor may be, when the instructions are executed, configured to identify a type of an input means causing the touch input. In an example, the processor may be, when the instructions are executed, configured to identify the character from among the first character and the second character, further based on whether the identified type is a finger of a user or a stylus pen.

In an example, the processor may be, when the instructions are executed, configured to identify the character from among the first character and the second character, further based on whether a mode of the electronic device is a portrait mode or a landscape mode.

In an example, the processor may be, when the instructions are executed, configured to identify the character from among the first character and the second character, further based on a relative position relation between a position of the first key and a position of a hand of a user causing the touch input.

In an example, the processor may be, when the instructions are executed, configured to identify the character from among the first character and the second character, further based on time between a timing at which another touch input immediately before the touch input has been received with respect to a key among the plurality of keys and a timing at which the touch input has been received.

In an example, the processor may be, when the instructions are executed, further configured to refrain from or bypass identifying the second character indicated by the second key based on identifying that the first character indicated by the first key corresponds to context derived from the at least one third character, and identify the first character as the character.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

It should be appreciated that various examples of the present disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a memory configured to store instructions; and
a processor, when the instructions are executed, configured to:
receive a touch input with a point of contact on a first key among a plurality of keys in a virtual keyboard displayed via the display;
identify, based on a first character indicated by the first key, a second character indicated by a second key adj acent to the first key among the plurality of keys, and at least one third character that has been displayed in a text input portion displayed with the virtual keyboard before the touch input is received, a character from the first character and the second character, in response to the touch input; and
display the identified character in the text input portion via the display.

2. The electronic device of claim 1, wherein the processor is, when the instructions are executed, configured to:
identify at least one first word that includes the first character as a character following the at least one third character, among a plurality of predetermined words including at least portion of the at least one third character;
identify at least one second word that includes, the second character as a character following the at least one third character; and
identify the character from the first character and the second character, based on a first relation between context derived from the at least one third character and the at least one first word and a second relation between the context and the at least one second word.

3. The electronic device of claim 2, wherein the processor is, when the instructions are executed, configured to identify the character from the first character and the second character, further based on a position of the point of the contact.

4. The electronic device of claim 3, wherein the processor is, when the instructions are executed, configured to:
identify, by identifying information regarding usage history of the virtual keyboard stored in the electronic device based on the position, a first probability that the touch input is an input on the first key and a second probability that the touch input is an input on the second key; and
identify the character from the first the character and the second the character, further based on the first probability and the second probability.

5. The electronic device of claim 4, wherein the plurality of keys includes third keys in a predetermined region and fourth keys out of the predetermined region, and
wherein the first probability and the second probability are changed according to whether the first key is a key among the third keys or a key among the fourth keys.

6. The electronic device of claim 2, wherein the processor is, when the instructions are executed, configured to:
identify, as the second key, a key corresponding to the context among keys surrounding the first key, in response to the touch input.

7. The electronic device of claim 1, wherein the processor is, when the instructions are executed, further configured to:
display the first key with enlarged size and the second key with enlarged size, on a condition that a character from among the first character and the second character is not capable of being identified based on the first character, the second character, and the at least one third character;
display another touch input on a key from among the first key with the enlarged size and the second key with the enlarged size; and
display, via the display, a character indicated by the key from which the other touch input is received, in the text input portion.

8. The electronic device of claim 1, wherein the processor is, when the instructions are executed, further configured to adjust information regarding usage history of the virtual keyboard stored in the electronic device based on whether an input for deleting the character displayed in the text input portion from the text input portion is received via the virtual keyboard before another character is displayed in the text input portion.

9. The electronic device of claim 1, wherein the processor is, when the instructions are executed, configured to:
identify a type of an input means causing the touch input; and
identify the character from the first character and the second character, further based on whether the identified type is a finger of a user or a stylus.

10. The electronic device of claim 1, wherein the processor is, when the instructions are executed, configured to identify the character from the first character and the second character, further based on whether a mode of the electronic device is a portrait mode or a landscape mode.

11. The electronic device of claim 1, wherein the processor is, when the instructions are executed, configured to identify the character from the first character and the second character, further based on a relative position relation between a position of the first key and a position of a hand of a user causing the touch input.

12. The electronic device of claim 1, wherein the processor is, when the instructions are executed, configured to identify the character from the first character and the second character, further based on time between a timing at which another touch input immediately before the touch input has been received with respect to a key among the plurality of keys and a timing at which the touch input has been received.

13. The electronic device of claim 1, wherein the processor is, when the instructions are executed, further configured to refrain from or bypass identifying the second character indicated by the second key based on identifying that the first character indicated by the first key corresponds to context derived from the at least one third character, and identify the first character as the character.

14. A method for operating an electronic device including a display, the method comprising:
receiving a touch input with a point of contact on a first key among a plurality of keys in a virtual keyboard displayed via the display;
identifying, based on a first character indicated by the first key, a second character indicated by a second key adjacent to the first key among the plurality of keys, and at least one third character that has been displayed in a text input portion displayed with the virtual keyboard before the touch input is received, a character from the first character and the second character, in response to the touch input; and
displaying the identified character in the text input portion via the display.

15. A non-transitory computer readable storage medium storing one or more programs, the one or more programs including instructions which, when being executed by a processor of an electronic device, cause the electronic device to:
receive a touch input with a point of contact on a first key among a plurality of keys in a virtual keyboard displayed via the display;
identify, based on a first character indicated by the first key, a second character indicated by a second key adj acent to the first key among the plurality of keys, and at least one third character that has been displayed in a text input portion displayed with the virtual keyboard before the touch input is received, a character from the first character and the second character, in response to the touch input; and
display the identified character in the text input portion via the display.
